# EUROPÄISCHE PATENTSCHRIFT

(11) **EP 0 468 128 B1**
(45) Veröffentlichungstag und Bekanntmachung des Hinweises auf die Patenterteilung: **15.06.1994**
(21) Anmeldenummer: 91101106.2
(22) Anmeldetag: 29.01.1991
(51) Int. Cl.: B23B 31/12

(54) **Bohrfutter**
Drill chuck
Mandrin de perceuse

(30) Priorität: 21.07.1990 DE 4023303; 06.12.1990 DE 9016578 U
(43) Veröffentlichungstag der Anmeldung: 29.01.1992
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 253 761
- EP-A- 0 300 375
- EP-A- 0 331 866
- EP-A- 0 340 310
- EP-B- 0 059 030
- DE-A- 3 809 000

## Beschreibung

Die Erfindung betrifft ein Bohrfutter mit zwischen sich eine Aufnahme für das Bohrwerkzeug bildenden Spannbacken, mit einem Futterkörper, in dem für die Spannbacken geneigt zur Drehachse verlaufende Führungsbohrungen angeordnet sind, und mit einem zur Drehachse koaxialen, drehbar und axial unverschieblich am Futterkörper gelagerten Stellring, bestehend aus einer Stellhülse und einem drehfest mit der Stellhülse verbundenen Gewindering, der zum Verstellen der Spannbacken ein mit der Drehachse koaxiales, an jeder Spannbacke mit einer daran vorgesehenen Zahnreihe im Eingriff stehendes Stellgewinde aufweist und axial nach hinten, d. h. in vom Bohrwerkzeug abgewandter Richtung, gegen den Futterkörper abgestützt ist, wobei die Stellhülse mit dem Gewindering axial von vorn her über den Futterkörper geschoben und der Stellring am Futterkörper gegen axiale Verschiebung nach vorn gesichert ist. Ein solches Bohrfutter ist aus dem Dokument EP-A- 0 253 761 bekannt.

Bei einem anderen aus der EP-B-0 059 030 bekannten Bohrfutter ist der in Umfangsrichtung einteilige Gewindering axial von vorn auf den Futterkörper aufgeschoben und gegen weitere Axialverschiebungen durch ein anschließend axial vor dem Gewindering auf den Futterkörper aufgesetztes Ringteil gesichert, an dem der Gewindering axial nach vorn gegen den Futterkörper abgestützt ist. Die aus Blech bestehende Stellhülse ist axial von hinten auf den am Futterkörper montierten GEwindering aufgepreßt. Diese Verbindung zwischen dem Gewindering und der Stellhülse kann Probleme bereiten, denn sie muß nicht nur in Umfangsrichtung verdrehungsfest, sondern auch axial verschiebungsfest erfolgen, wobei die Drehfestigkeit der Verbindung dann von besonderer Bedeutung ist, wenn in Bezug auf den Futterkörper selbsttätige Drehbewegungen des Gewinderings, die ein zu festes Nachspannen oder ein Lockern des im Bohrfutter gehaltenen Werkzeugs ergeben können, vermieden werden sollen und dazu am Futterkörper ein gegen den Stellring verstellbar geführter Sperring vorgesehen ist, der in einer an der Stellhülse angreifenden Stellung diese und damit auch den Gewindering gegen unerwünschte Verdrehung sichert.

Der Erfindung liegt die Aufgabe zugrunde, ein Bohrfutter der eingangs genannten Art so auszubilden, daß der Gewindering und die Stellhülse sicher und stabil miteinander verbunden sind und die Herstellung und Montage des erfindungsgemäßen Bohrfutters auf einfache und kostensparende Weise möglich ist.

Diese Aufgabe wird nach der Erfindung dadurch gelöst, daß der Gewindering axial von hinten her in die Stellhülse eingesteckt ist und in der Steckrichtung nach vorn auf einer Ringschulter der Stellhülse sitzt, daß vom Stellring nur die Stellhülse axial nach vorn am Futterkörper abgestützt ist, und daß am Gewindering und an der Stellhülse in axialer Richtung verlaufende Steckteile, wie Schlitz-Federausbildung, vorgesehen ist, die beim Einstecken des Gewinderings in die Stellhülse zum Eingriff kommen und eine in Umfangsrichtung formschlüssige Verbindung des Gewinderings mit der Stellhülse bilden.

Der durch die Erfindung erreichte Vorteil besteht im wesentlichen darin, daß durch die jeweils gegen den Futterkörper stattfindende Abstützung der Stellhülse axial nach vorn und des Gewinderings axial nach hinten beide axial zusammengehalten sind und ihre Verbindung miteinander von axialer Zugbeanspruchung praktisch entlastet ist, so daß die Stellhülse und der Gewindering in ihrem zusammengesteckten Zustand keiner weiteren gegenseitigen Sicherung bedürfen. Die Montage des Gewinderings in der Stellhülse und der Stellhülse mit dem Gewindering am Futterkörper erfolgt durch einfache Steckvorgänge.

Der Schlitz und die Feder können über ihre gesamte axiale Länge gleichbleibende radiale Abmessungen aufweisen. Eine insoweit aber bessere und daher bevorzugte Ausführungsform ist dadurch gekenzeichnet, daß am Gewindering zu seiner Abstützung gegen den Futterkörper eine rückwärtige, d. h. axial vom Bohrwerkzeug abgewandte, ringförmige Lagerfläche ausgebildet ist, und daß in Richtung von der Lagerfläche zur Ringschulter hin sich die Feder an der Stellhülse zunehmend radial erhöht und der Schlitz im Gewindering sich entsprechend zunehmend radial vertieft. In Umfangsrichtung erzeugt eine solche Schlitz-Federverbindung eine auch gegen große Belastungen drehfeste Verbindung zwischen der Stellhülse und dem Gewindering, weil sich die Feder nicht nur axial über den gesamten Abstand zwischen der Lagerfläche und der Ringschulter erstrecken, sondern auch ihre radiale Abmessung zur Ringschulter hin zunehmend groß gewählt werden kann, so daß die in Umfangsrichtung zwischen Feder- und Schlitzwandung wirksame Kraftübertragungsfläche ebenfalls groß und die spezifische Kraftdichte an dieser Fläche entsprechend klein ist. Dadurch besteht die besonders vorteilhafte Möglichkeit, die Stellhülse mit der Ringschulter und der Feder im Spritzgußverfahren aus einem geeigneten Kunststoff herzustellen. Außerdem kann auf diese Weise der Schlitz so ausgebildet werden, daß er die Lagerfläche am Gewindering und damit die Laufeigenschaften des den Gewindering über die Lagerfläche gegen den Futterkörper abstütztenden Lagers nicht beeinträchtigt.

Eine in dieser Hinsicht bevorzugte Ausführungsform der Erfindung ist dadurch gekennzeichnet, daß der Boden des Schlitzes auf der Seite der Lagerfläche radial außerhalb ihres tragenden Teils und an der axial gegenüber liegenden, vorderen Seite des Gewinderings radial innerhalb des Innenrandes der Ringschulter liegt. Das bedeutet, daß im Fall eines Gleitlagers zwischen dem Gewindering und dem Futterkörper der Schlitzboden an der Lagerfläche außerhalb der Lagergleitfläche, im Fall eines Wälzlagers außerhalb der Laufbahn der Wälzkörper liegt. Das andere Ende des Schlitzbodens radial innerhalb des Innenrandes der Ringschulter enden zu lassen, empfiehlt sich nicht nur wegen der schon angesprochenen optimalen Drehfestigkeit zwischen dem Gewindering und der Stellhülse, sondern ist auch noch aus anderen, bearbeitungstechnischen Gründen von Vorteil. Wird nämlich der Schlitz gefräst, was herstellungstechnisch besonders einfach ist, läßt sich am ringschulterseitigen Ende des Schlitzbodens eine Gratbildung nicht vermeiden. Der Grat würde aber den Sitz des Gewinderings auf der Ringschulter beeinträchtigen und müßte also in einem zusätzlichen Arbeitsgang entfernt werden, wenn der Schlitzboden an der Ringschulterfläche endet. Dies kann vermieden werden, wenn sich der Schlitz radial nach innen bis über den Innenrand der Ringschulter erstreckt. Wird dann die Anordnung zweckmäßigerweise noch so getroffen, daß die Stellhülse axial nach vorn über den Gewindering vorgezogen ist und beide zwischen sich einen an die Ringschulter anschließenden Ringraum bilden, in dem der Schlitzboden ausläuft, so kann der Grat bleiben wie er ist und frei in den Ringraum vorstehen, ohne noch in irgend einer Weise zu stören. Im übrigen bietet es sich dann in weiter bevorzugter Ausführungsform an, die Stellhülse mit ihrem über den Gewindering vorgezogenen Teil axial nach vorn am Futterkörper abzustützen.

Um bei der Montage des Stellrings die gegenseitige Ausrichtung von Gewindering und Stellhülse und ihr gegenseitiges Zusammenstecken zu erleichtern, empfiehlt es sich, die Stellhülse innenseitig mit sich an die Feder anschließenden und bis zum axial rückwärtigen Rand der Stellhülse verlaufenden Führungsleisten zu versehen, die beim Einstecken des Gewinderings in die Stellhülse in den Schlitz greifen und durch Anlage an den Schlitzflanken den Gewindering mit dem Schlitz auf die Feder ausrichten, wobei die radiale Tiefe des Schlitzes an der Lagerfläche des Gewinderings mindestens gleich der radialen Höhe der Führungsleisten ist.

Die Steckverbindung zwischen der Stellhülse und dem Gewindering braucht dann keine besonderen Genauigkeitsforderungen zu erfüllen, wenn der Gewindering unabhängig von der Stellhülse für sich in Bezug auf den Futterkörper geführt ist. Eine in dieser Hinsicht bevorzugte Ausführungsform ist dadurch gekennzeichnet, daß der Gewindering an seiner Rückseite mit einem Ringfalz versehen ist, an dessen radial äußerer Umfangsfläche der Gewindering radial in Bezug auf den Futterkörper geführt ist. Je nach Ausbildung des Lagers zwischen dem Gewindering und dem Futterkörper kann dann im Fall eines Gleitlagers der Gewindering mit der radial innerhalb seiner Lagerfläche liegenden äußeren Umfangsfläche des Ringfalzes unmittelbar am Futterkörper geführt sein oder im Fall eines Wälzlagers am Futterkörper ein der Lagerfläche des Gewinderings axial gegenüber liegender Lagerring angeordnet sein, an dessen innerer Umfangsfläche der Gewindering mit der äußeren Umfangsfläche seines Ringfalzes geführt ist.

Im folgenden wird die Erfindung an einem in der Zeichnung dargestellten Ausführungsbeispiel näher erläutert; es zeigen:
- Fig. 1: ein Bohrfutter, teils in Seitenansicht, teils im axialen Längsschnitt,

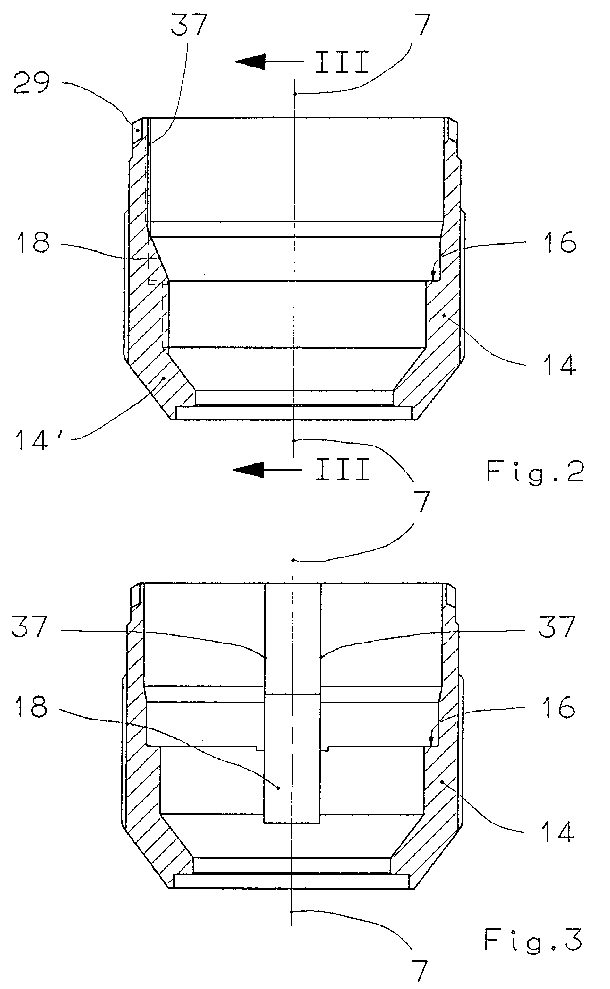

- Fig. 2: einen Schnitt entsprechend Fig. 1 nur durch die Stellhülse des Bohrfutters,
- Fig. 3: den Schnitt III - III in Fig. 2, und

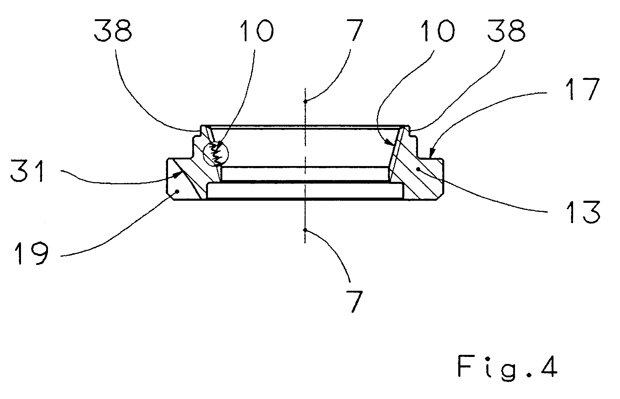

- Fig. 4: einen Schnitt entsprechend Fig. 1 nur durch den Gewindering.

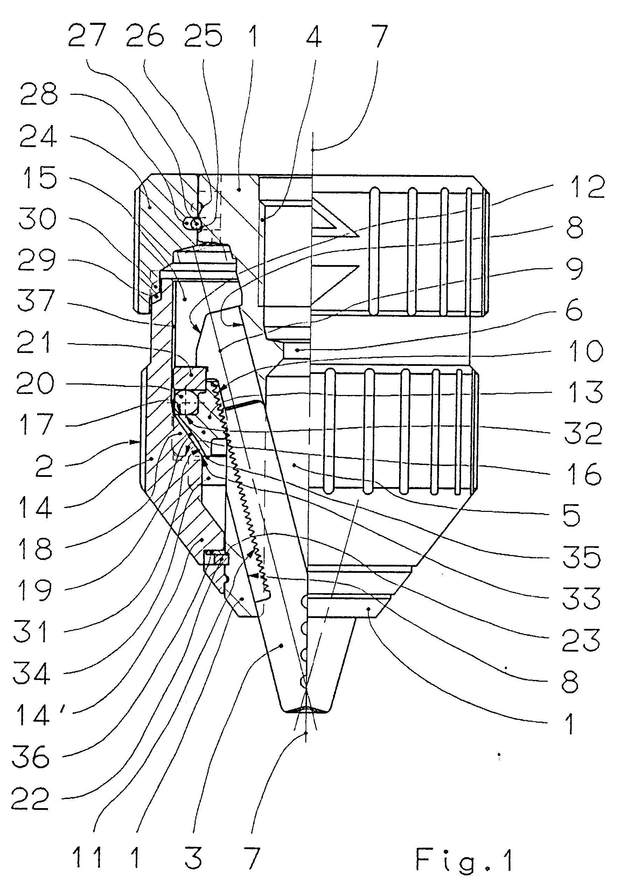

In der Zeichnung ist der Futterkörper mit 1 und der Stellring mit 2 bezeichnet. Der Futterkörper 1 ist mittels einer Gewindeaufnahme 4 an eine nicht dargestellte Bohrspindel anschließbar. Die üblicherweise zu dritt über den Umfang des Bohrfutters verteilten und zwischen sich eine Aufnahme für das nicht dargestellte Bohrwerkzeug bildenden Spannbacken tragen die Bezugsziffer 3. Die im Futterkörper 1 vorgesehene Ausnehmung 5 zur Aufnahme des Bohrerschafts kann über einen axialen Durchgang 6 mit der Gewindeaufnahme 4 in Verbindung stehen, so daß Schlagbewegungen von der Bohrspindel her unmittelbar auf das Ende des in der Aufnahme zwischen den Spannbacken 3 gehaltenen Bohrerschaftes übertragen werden können. Die Spannbacken 3 sind gleichmäßig um die Drehachse 7 des Bohrfutters im Futterkörper 1 in Führungsbohrungen 8 angeordnet, die in zur Drehachse 7 geneigter Richtung verlaufen, so daß die Achsen 9 der Führungsbohrungen 8 nach vorn, d. h. zum Bohrwerkzeug hin, zusammenlaufen. Der Stellring 2 ist koaxial zur Drehachse 7 am Futterkörper 1 angeordnet. Er ist drehbar und axial unverschiebbar gelagert und zum Verstellen der Spannbacken 3 in deren Führungsbohrungen 8 mit einem mit der Drehachse 7 koaxialen Stellgewinde 10 versehen. Dieses Stellgewinde 10 ist entsprechend der Neigung der Spannbacken 3 gegen die Drehachse 7 konisch ausgebildet und steht an jeder Spannbacke 3 mit einer daran vorgesehenen Zahnreihe 11 im Eingriff, so daß eine Drehung des Stellrings 2 ein Verschieben der Spannbacken 3 in den Führungsbohrungen 8 und damit eine Änderung des zwischen den Spannbacken 3 gebildeten Spannquerschnitts für das Bohrwerkzeug ergibt. Die Spannbacken 3 sind im wesentlichen kreiszylindrische Bolzen, die über einen Teil ihrer Länge auf der dem Stellgewinde 10 zugewandten Seite abgeflacht und dort mit der Zahnreihe 11 ausgestattet sind. Die Führungsbohrungen 8 treten in Öffnungen 12 an der Mantelfläche des Futterkörpers 1 aus. Im Bereich dieser Öffnungen 12 besitzt der Stellring 2 einen in Umfangsrichtung einteiligen Gewindering 13, an dem das Stellgewinde 10 ausgebildet ist. Weiter besitzt der Stellring 2 eine Stellhülse 14, die die Öffnungen 12 übergreift und abdeckt und zusammen mit dem Futterkörper 1 einen an die Öffnungen 12 anschließenden Ringraum 15 bildet, in den die Spannbacken 3 aus den Führungsbohrungen 8 bei großen Spannquerschnitten austreten können. Bei der Montage des Stellrings 2 wird zunächst der Gewindering 13 axial von hinten her in die noch freie Stellhülse 14 eingesteckt, bis er in der Steckrichtung nach vorn auf einer Ringschulter 16 der Stellhülse 14 sitzt. Die Stellhülse 14 wird dann mit dem eingesteckten Gewindering 13 axial von vorn, d. h. vom Bohrwerkzeug her in Richtung zur Gewindeaufnahme 4 hin, über den Futterkörper 1 geschoben, bis der Gewindering 13 zur axialen Abstützung am Futterkörper 1 kommt. Dazu ist am Gewindering 13 eine rückwärtige, d. h. axial vom Bohrwerkzeug abgewandte und zur Gewindeaufnahme 4 hin gerichtete ringförmige Lagerfläche 17 ausgebildet. Zwischen dem Gewindering 13 und der Stellhülse 14 ist weiter eine in Steckrichtung verlaufende und beide drehfest miteinander verbindende Schlitz-Federausbildung 18, 19 vorgesehen, welche die Stellhülse 14 gegen Verdrehungen relativ zum Gewindering 13 sichert. Die axial rückwärtige Abstützung des Gewinderings 13 erfolgt über ein Kugellager 20 und einen Lagerring 21, der am Futterkörper 1 festgelegt ist. Axial nach vorn ist die Stellhülse 14 in ihrer axialen Lage durch einen Federring 22 gesichert, der in eine Ringnut 23 des Futterkörpers 1 eingesetzt ist. Weiter ist am Futterkörper 1 zwischen der Stellhülse 14 und dem hinteren Futterkörperende ein undrehbar, aber axial verstellbar geführter Sperring 24 vorgesehen, dessen axiale Verstellung zwischen zwei durch Rastsitze 25, 26 festgelegten Endstellungen möglich ist. Die Rastsitze 25, 26 sind durch zwei ringförmige Rastaufnahmen im Futterkörper 1 gebildet, in die ein federnder Rastring 27 eingreifen kann, der in einer Ringnut 28 des Sperrings 24 gehalten ist. In seinem axial vorderen, in Fig. 1 gezeigten Rastsitz 25 sichert der Sperring 24 die Stellhülse 14 und mit ihr den Gewindering 13 gegen unerwünschtes Verdrehen während des Bohrvorgangs. Dazu ist die Stellhülse 14 an ihrem axial rückwärtigen Rand mit Sperrausnehmungen 29 versehen, in die der Sperring 24 in seiner an der Stellhülse 14 angreifenden Stellung mit entsprechenden Sperrvorsprüngen 30 eingreift. Diese Sperrausnehmungen 29 und Sperrvorsprünge 30 sind im Ausführungsbeispiel nach Art je eines Zahnkranzes an der Stellhülse 14 bzw. am Sperring 24 ausgebildet. Zum Verdrehen des Stellrings 2 muß zunächst der Sperring 24 aus seinem den Stellring 2 gegen Verdrehen sichernden Angriff am Stellring von Hand gelöst werden.

Bei der die Stellhülse 14 und den Gewindering 13 verbindenden Schlitz-Federausbildung 18, 19 erhöht sich die Feder 18 an der Stellhülse 14 radial zunehmend in Richtung von der Lagerfläche 17 zur Ringschulter 16 hin. Entsprechend vertieft sich in dieser Richtung radial zunehmend der Schlitz 19 im Gewindering 13. Dabei liegt der Boden 31 des Schlitzes 19 auf der Seite der Lagerfläche 17 radial außerhalb ihres tragenden Teils, also radial außerhalb der Laufbahn 32 der Wälzkörper 20, so daß die Laufeigenschaft des Lagers durch den Schlitz 19 nicht beeinträchtigt wird. An der dem Lager axial gegenüber liegenden Seite des Gewinderings 13 liegt der Schlitzboden 31 radial innerhalb des Innenrandes 33 der Ringschulter 16. Die Stellhülse 14 ist axial nach vorn über den Gewindering 13 vorgezogen. Zwischen diesem vorgezogenen Hülsenteil 14′ und dem Gewindering 13 befindet sich ein an die Ringschulter 16 anschließender Ringraum 34, in den der Schlitzboden 31 ausläuft und ein von der Herstellung des Schlitzes 19 herrührender, in Fig. 1 gestrichelt angedeuteter Grat 35 frei vorstehen kann. Die Stellhülse 14 ist außerdem mit dem über den Gewindering 13 axial nach vorn vorstehenden Hülsenteil 14′ am Futterkörper 1, nämlich dem schon erwähnten Federring 22 abgestützt. Besteht die Stellhülse 14 aus Kunststoff, empfiehlt es sich, an der vorderen Stirnseite der Stellhülse 14 einen dem Federring 22 anliegenden Gleitring 36 anzuordnen, um einen zu schnellen Verschleiß der Stellhülse 14 an dieser Stelle möglichst zu vermeiden.

Innenseitig an der Stellhülse 14 sind an die Feder 18 anschließend und bis zum axial rückwärtigen Rand der Stellhülse verlaufende Führungsleisten 37 vorgesehen. Diese Führungsleisten 37 greifen, wenn der Gewindering 13 in die Stellhülse 14 eingesteckt wird, in den Schlitz 19 des Gewinderings 13 und richten dabei durch ihre Anlage an den Schlitzflanken den Gewindering 13 mit dem Schlitz 19 auf die Feder 18 aus, wodurch sich das Zusammenstecken der Stellhülse 14 und des Gewinderings 13 erleichtert. Selbstverständlich ist dabei die radiale Tiefe des Schlitzes 19 an der Lagerfläche 17 des Gewinderings 13 mindestens gleich der radialen Höhe der Führungsleisten 37, so daß der Gewindering 13 den für die Führungsleisten 37 erforderlichen lichten Durchtrittsquerschnitt besitzt.

Der Gewindering 13 ist für sich selbständig gegenüber dem Futterkörper 1 geführt. Dazu ist der Gewindering 13 an seiner Rückseite mit einem Ringfalz versehen, an dessen radial äußerer Umfangsfläche 38 die radiale Führung des Gewinderings 13 stattfindet, nämlich durch Anlage der äußeren Umfangsfläche 38 an der inneren Umfangsfläche des am Futterkörper 1 fest angeordneten Lagerrings 21.

## Patentansprüche

1. Bohrfutter mit zwischen sich eine Aufnahme für das Bohrwerkzeug bildenden Spannbacken (3), mit einem Futterkörper (1), in dem für die Spannbacken geneigt zur Drehachse verlaufende Führungsbohrungen (8) angeordnet sind, und mit einem zur Drehachse koaxialen, drehbar und axial unverschieblich am Futterkörper gelagerten Stellring (2), bestehend aus einer Stellhülse (14) und einem drehfest mit der Stellhülse (14) verbundenen Gewindering (13), der zum Verstellen der Spannbacken ein mit der Drehachse koaxiales, an jeder Spannbacke mit einer daran vorgesehenen Zahnreihe (11) im Eingriff stehendes Stellgewinde (10) aufweist und axial nach hinten, d. h. in vom Bohrwerkzeug abgewandter Richtung, gegen den Futterkörper (1) abgestützt ist, wobei die Stellhülse (14) mit dem Gewindering (13) axial von vorn her über den Futterkörper (1) geschoben und der Stellring (2) am Futterkörper (1) gegen axiale Verschiebung nach vorn gesichert ist, dadurch gekennzeichnet, daß der Gewindering (13) axial von hinten her in die Stellhülse (14) eingesteckt ist und in der Steckrichtung nach vorn auf einer Ringschulter (16) der Stellhülse (14) sitzt, daß vom Stellring (2) nur die Stellhülse (14) axial nach vorn am Futterkörper (1) abgestützt ist, und daß am Gewindering (13) und an der Stellhülse (14) in axialer Richtung verlaufende Steckteile, wie Schlitz-Federausbildung (18, 19), vorgesehen sind, die beim Einstecken des Gewinderings (13) in die Stellhülse (14) zum Eingriff kommen und eine in Umfangsrichtung formschlüssige Verbindung des Gewinderings (13) mit der Stellhülse (14) bilden.

2. Bohrfutter nach Anspruch 1, dadurch gekennzeichnet, daß am Gewinderring (13) zu seiner Abstützung gegen den Futterkörper (1) eine rückwärtige, d. h. axial vom Bohrwerkzeug abgewandte, ringförmige Lagerfläche (17) ausgebildet ist, und daß in Richtung von der Lagerfläche (17) zur Ringschulter (16) hin sich die Feder (18) an der Stellhülse (14) zunehmend radial erhöht und der Schlitz (19) im Gewindering (13) sich entsprechend zunehmend radial vertieft.

3. Bohrfutter nach Anspruch 2, dadurch gekennzeichnet, daß der Boden (31) des Schlitzes (19) auf der Seite der Lagerfläche (17) radial außerhalb ihres tragenden Teils und an der axial gegenüber liegenden, vorderen Seite des Gewinderings (13) radial innerhalb des Innenrandes (33) der Ringschulter (16) liegt.

4. Bohrfutter nach Anspruch 2 oder 3, dadurch gekennzeichnet, daß im Fall eines Gleitlagers zwischen dem Gewindering (13) und dem Futterkörper (1) der Schlitzboden (31) an der Lagerfläche (17) außerhalb der Lagergleitfläche liegt.

5. Bohrfutter nach Anspruch 2 oder 3, dadurch gekennzeichnet, daß im Fall eines Wälzlagers zwischen dem Gewindering (13) und dem Futterkörper (1) der Schlitzboden (31) an der Lagerfläche (17) außerhalb der Laufbahn (32) der Wälzkörper (20) liegt.

6. Bohrfutter nach einem der Ansprüche 1 bis 5, dadurch gekennzeichnet, daß die Stellhülse (14) axial nach vorn über den Gewindering (13) vorgezogen ist und beide zwischen sich einen an die Ringschulter (16) anschließenden Ringraum (34) bilden, in den der Schlitzboden (31) ausläuft.

7. Bohrfutter nach Anspruch 6, dadurch gekennzeichnet, daß die Stellhülse (14) mit ihrem über den Gewindering (13) vorgezogenen Teil (14′) axial nach vorn am Futterkörper (1) abgestützt ist.

8. Bohrfutter nach einem der Ansprüche 1 bis 7, dadurch gekennzeichnet, daß die Stellhülse (14) innenseitig mit sich an die Feder (18) anschließenden und bis zum axial rückwärtigen Rand der Stellhülse (14) verlaufenden Führungsleisten (37) versehen ist, die beim Einstecken des Gewinderings (13) in die Stellhülse (14) in den Schlitz (19) greifen und durch Anlage an den Schlitzflanken den Gewindering (13) mit dem Schlitz (19) auf die Feder (18) ausrichten, wobei die radiale Tiefe des Schlitzes (19) an der Lagerfläche (17) des Gewinderings (13) mindestens gleich der radialen Höhe der Führungsleisten (37) ist.

9. Bohrfutter nach einem der Ansprüche 1 bis 8, dadurch gekennzeichnet, daß der Gewindering (13) an seiner Rückseite mit einem Ringfalz versehen ist, an dessen radial äußerer Umfangsfläche (38) der Gewindering (13) radial in Bezug auf den Futterkörper (1) geführt ist.

10. Bohrfutter nach Anspruch 9, dadurch gekennzeichnet, daß im Fall eines Gleitlagers zwischen dem Gewindering (13) und dem Futterkörper (1) der Gewindering mit der radial innerhalb seiner Lagerfläche (17) liegenden äußeren Umfangsfläche (38) des Ringfalzes unmittelbar am Futterkörper (1) geführt ist.

11. Bohrfutter nach Anspruch 9, dadurch gekennzeichnet, daß im Fall eines Wälzlagers zwischen dem Gewindering (13) und dem Futterkörper (1) an diesem ein der Lagerfläche (17) des Gewinderings (13) axial gegenüber liegender Lagerring (21) angeordnet ist, an dessen innerer Umfangsfläche der Gewindering (13) mit der äußeren Umfangsfläche (38)seines Ringfalzes geführt ist.

## Claims

1. A drilling chuck comprising clamping jaws (3) which form between them a receiving means for the drilling tool, a chuck body (1) in which guide bores (6) are arranged extending inclinedly relative to the axis of rotation for the clamping jaws, and an adjusting ring (2) which is coaxial with respect to the axis of rotation and which is mounted rotatably and axially immovably on the chuck body (1) and which comprises an adjusting sleeve (14) and a screwthreaded ring (13), the screwthreaded ring (13) being non-rotatably connected to the adjusting sleeve (14) and for adjustment of the clamping jaws having an adjusting screwthread (10) which is coaxial with the axis of rotation and which at each clamping jaw is engaged with a raw of teeth (11) provided on the clamping jaw and being supported axially rearwardly, that is to say in a direction away from the drilling tool, against the chuck body (1), wherein the adjusting sleeve (14) with the screwthreaded ring (13) is pushed axially from the front over the chuck body (1) and the adjusting ring (2) is secured on the chuck body (1) to prevent axial displacement thereof in a forward direction, characterised in that the screwthreaded ring (13) is axially inserted from the rear into the adjusting sleeve (14) and sits in the insertion direction forwardly on an annular shoulder (16) of the adjusting sleeve (14), that of the adjusting ring (2) only the adjusting sleeve (14) is supported axially in a forward direction on the chuck body (1) and that provided on the screwthreaded ring (13) and on the adjusting sleeve (14) are axially extending interengaging connector portions such as a slot-and-tongue configuration (18, 19) which come into engagement upon insertion of the screwthreaded ring (13) into the adjusting sleeve (14) and form a connection which is positively locking in the peripheral direction for the screwthreaded ring (13) to the adjusting sleeve (14).

2. A drilling chuck according to claim 1 characterised in that an annular bearing surface (17) which is at the rear, that is to say which faces axially away from the drilling tool, is provided on the screwthreaded ring (13) for support thereof against the chuck body (1), and that the tongue (18) on the adjusting sleeve (14) increases in height radially in a direction from the bearing surface (17) towards the annular shoulder (16) and the slot (19) in the screwthreaded ring (13) correspondingly radially increases in depth.

3. A drilling chuck according to claim 2 characterised in that the bottom (31) of the slot (19) lies on the side of the bearing surface (17) radially outwardly of the load-bearing portion thereof and at the axially oppositely disposed front side of the screwthreaded ring (13) it lies radially inwardly of the inner edge (33) of the annular shoulder (16).

4. A drilling chuck according to claim 2 or claim 3 characterised in that in the case where there is a friction bearing between the screwthreaded ring (13) and the chuck body (1) the slot bottom (31) at the bearing surface (17) lies outwardly of the bearing friction surface.

5. A drilling chuck according to claim 2 or claim 3 characterised in that in the case where there is a rolling bearing between the screwthreaded ring (13) and the chuck body (1) the slot bottom (31) at the bearing surface (17) lies outwardly of the raceway (32) of the rolling bodies (20).

6. A drilling chuck according to one of claims 1 to 5 characterised in that the adjusting sleeve (14) is extended axially forwardly over the screwthreaded ring (13) and the two form between them an annular space (34) which adjoins the annular shoulder (16) and into which the slot bottom (31) extends.

7. A drilling chuck according to claim 6 characterised in that the adjusting sleeve (14) is supported axially in a forward direction on the chuck body (1) with the portion (14′) of the adjusting sleeve, which is extended over the screwthreaded ring (13).

8. A drilling chuck according to one of claims 1 to 7 characterised in that on its inside the adjusting sleeve (14) is provided with guide bar portions (37) which adjoin the tongue (18) and which extend as far as the axially rearward edge of the adjusting sleeve (14) and which upon insertion of the screwthreaded ring (13) into the adjusting sleeve (14) engage into the slot (19) and by bearing against the sides of the slot align the screwthreaded ring (13) with the slot (19) relative to the tongue (18), the radial depth of the slot (19) at the bearing surface (17) of the screwthreaded ring (13) being at least equal to the radial height of the guide bar portions (37).

9. A drilling chuck according to one of claims 1 to 8 characterised in that at its rear side the screwthreaded ring (13) is provided with an annular recess, at the radially outward peripheral surface (38) of which the screwthreaded ring (13) is guided radially with respect to the chuck body (1).

10. A drilling chuck according to claim 9 characterised in that in the case where there is a friction bearing between the screwthreaded ring (13) and the chuck body (1) the screwthreaded ring is guided directly on the chuck body (1) with the outer peripheral surface (38) of the annular recess, which surface lies radially inwardly of its bearing surface (17).

11. A drilling chuck according to claim 9 characterised in that in the case where there is a rolling bearing between the screwthreaded ring (13) and the chuck body (1), arranged on same is a bearing ring (21) which is disposed axially opposite the bearing surface (17) of the screwthreaded ring (13) and at the inner peripheral surface of which the screwthreaded ring (13) is guided with the outer peripheral surface (38) of its annular recess.

## Revendications

1. Mandrin de perceuse comportant des mâchoires de serrage (3), qui limitent entre elles un logement pour le foret, et comportant un corps de mandrin (1), dans lequel sont disposés des perçages de guidage (8) qui s'étendent obliquement par rapport à l'axe de rotation pour les mâchoires de serrage, et une bague de réglage (2), coaxiale à l'axe de rotation et montée de manière à pouvoir tourner, sans possibilité de déplacement axial, sur le corps du mandrin et constituée par une douille de réglage (14) et une bague filetée (13) qui est reliée avec blocage en rotation à la douille de réglage (14) et possède, pour le déplacement des mâchoires de serrage, un filetage de réglage (10), qui engrène, sur chaque mâchoire, avec une rangée de dents (11) prévues sur cette mâchoire, et prend appui axialement vers l'arrière, c'est-à-dire dans la direction tournée à l'opposé du foret, contre le corps (1) du mandrin, et dans lequel la douille de réglage (14) est repoussée axialement à partir de l'avant sur le corps (1) du mandrin au moyen de la bague filetée (13), et la bague de réglage (2) est bloquée sur le corps (1) du mandrin, vis-à-vis d'un déplacement axial vers l'avant, caractérisé en ce que la bague filetée (13) est enfichée axialement à partir de l'arrière dans la douille de réglage (14) et prend appui, dans la direction d'enfichage vers l'avant, sur un épaulement annulaire (16) de la douille de réglage (14), que seule la douille de réglage (14) est supportée axialement vers l'avant par la bague de réglage (2) sur le corps (1) du mandrin et que sur la bague filetée (13) et sur la douille de réglage (14) il est prévu des éléments d'enfichage, qui s'étendent dans la direction axiale, comme par exemple un système à rainure et languette (18, 19), qui viennent en prise, lors de l'enfichage de la bague filetée (13) dans la douille de réglage (14) et établissent une liaison par formes complémentaires, dans la direction circonférentielle, entre la bague filetée (13) et la douille de réglage (14).

2. Mandrin de perceuse selon la revendication 1, caractérisé en ce que sur la bague filetée (13) est formée, pour son support contre le corps (1) du mandrin, une surface annulaire de support (17), située sur le côté arrière, c'est-à-dire situé axialement à l'opposé du foret, et que la languette (18) s'élève d'une manière croissante radialement sur la douille de réglage (14) et la fente (19) s'étend radialement de plus en plus profondément d'une manière correspondante dans la bague filetée (13), dans la direction allant de la surface de support (17) vers l'épaulement annulaire (16).

3. Mandrin de perceuse selon la revendication 2, caractérisé en ce que le fond (31) de la fente (19) du côté de la surface de support (17) est situé radialement à l'extérieur de sa partie de support et que l'épaulement annulaire (16) est situé radialement à l'intérieur du bord intérieur (33), sur la face avant, située axialement à l'opposé, de la bague filetée (13).

4. Mandrin de perceuse selon la revendication 2 ou 3, caractérisé en ce que le fond (31) de la fente est situé sur la surface de support (17) à l'extérieur de la surface de glissement du palier, dans le cas d'un palier lisse, entre la bague filetée (13) et le corps du mandrin.

5. Mandrin de perceuse selon la revendication 2 ou 3, caractérisé en ce que dans le cas d'un roulement entre la bague filetée (13) et le corps (1) du mandrin, le fond (31) de la fente est situé sur la surface de support (17) à l'extérieur de la piste de roulement (32) du corps (20) du roulement.

6. Mandrin de perceuse selon l'une des revendications 1 à 5, caractérisé en ce que la douille de réglage (14) avance axialement au-delà de la bague filetée (13) et que la douille de réglage et la bague filetée délimitent entre elles un espace annulaire (34), qui se raccorde à l'épaulement annulaire (16) et dans lequel débouche le fond de la fente (31).

7. Mandrin de perceuse selon la revendication 6, caractérisé en ce que la douille de réglage (14) prend appui axialement vers l'avant, par sa partie (14′), qui s'avance au-delà de la bague filetée (13), sur le corps (1) du mandrin.

8. Mandrin de perceuse selon l'une des revendications 1 à 7, caractérisé en ce que la douille de réglage (14) est équipée, sur sa face intérieure, de barrettes de guidage (37), qui se raccordent à la languette (18) et s'étendent jusqu'à la paroi axiale arrière de la douille de réglage (14) et qui, lors de l'enfichage de la bague filetée (13) dans la douille de réglage (14), s'engage dans la fente (19) et, sous l'effet de leur application contre les flancs de la fente, alignent la bague filetée (13) pourvue de la fente (19) sur la languette (18), la profondeur radiale de la fente (19) sur la surface de support (17) de la bague filetée (13) étant égale au moins à la hauteur radiale des barrettes de guidage (37).

9. Mandrin de perceuse selon l'une des revendications 1 à 8, caractérisé en ce que la bague filetée (13) comporte, sur sa face arrière, un repli annulaire, et que la bague filetée (13) est guidée radialement par rapport au corps (1) du mandrin, sur la surface circonférentielle (38), extérieure du point de vue radial, de ce repli annulaire.

10. Mandrin de perceuse selon la revendication 9, caractérisé en ce que, dans le cas d'un palier lisse entre la bague filetée (13) et le corps (1) du mandrin, la bague filetée est guidée par la surface extérieure circonférentielle (38), située radialement à l'intérieur de sa surface de support (17), du repli annulaire directement sur le corps (1) du mandrin.

11. Mandrin de perceuse selon la revendication 9, caractérisé en ce que, dans le cas d'un roulement situé entre la bague filetée (13) et le corps (1) du mandrin, une bague de support (21) située axialement en vis-à-vis de la surface de support (17) de la bague filetée (13) et sur la surface circonférentielle intérieure de laquelle la bague filetée (13) est guidée par la surface circonférentielle extérieure (38) de son repli annulaire, est guidée sur le corps (1) du mandrin.
